# EUROPÄISCHE PATENTSCHRIFT

(11) **EP 3 043 973 B1**
(45) Veröffentlichungstag und Bekanntmachung des Hinweises auf die Patenterteilung: **07.11.2018**
(21) Anmeldenummer: 14761797.1
(22) Anmeldetag: 10.09.2014
(51) Int. Cl.: B29B 9/06, B29C 47/00, C08J 3/12, B29B 9/12, B29B 9/16

(54) **VERFAHREN ZUR HERSTELLUNG VON OBERFLÄCHIG KRISTALLINEN SPHÄRISCHEN GRANULATEN MITTELS HEISSABSCHLAGS, UND VORRICHTUNG ZUR DURCHFÜHRUNG DES VERFAHRENS**
METHOD FOR PRODUCING SUPERFICIALLY CRYSTALLINE SPHERICAL GRANULES BY MEANS OF HOT CUT PELLETIZING, AND APPARATUS FOR CARRYING OUT THE METHOD
PROCÉDÉ DE FABRICATION DE GRANULÉS SPHÉRIQUES CRISTALLINS EN SURFACE PAR FRACTIONNEMENT À CHAUD, ET DISPOSITIF DE MISE EN OEUVRE DE CE PROCÉDÉ

(30) Priorität: 11.09.2013 DE 102013015190
(43) Veröffentlichungstag der Anmeldung: 20.07.2016
(73) Patentinhaber: Maag Automatik GmbH, 63762 Großostheim (DE)
(72) Erfinder: DEISS, Stefan, 55296 Harxheim (DE); MÜRB, Reinhardt-Karsten, 63743 Aschaffenburg (DE)
(74) Vertreter: Spranger, Stephan
(86) Internationale Anmeldenummer: PCT/EP2014/002450
(87) Internationale Veröffentlichungsnummer: WO 2015/036115

(56) Entgegenhaltungen:
- EP-A2- 2 033 753
- WO-A1-2005/044901
- WO-A1-2006/122340
- WO-A1-2013/185924
- DE-A1-102009 006 123
- DE-A1-102009 015 578
- FR-A1- 2 689 041

## Beschreibung

Die Erfindung betrifft ein Verfahren zur Herstellung von oberflächig kristallinen sphärischen Granulaten mittels Trockenheißabschlag und eine Vorrichtung zur Durchführung des Verfahrens.

Schmelzematerial wird heute allgemein beispielsweise durch Granulierung be- und verarbeitet. Bei der Granulierung von Schmelzematerial, insbesondere z.B. von Kunststoffen, kommen generell häufig Extruder oder Schmelzepumpen zum Einsatz. Diese Extruder oder Schmelzepumpen drücken geschmolzenes Kunststoffausgangsmaterial durch Düsen einer Lochplatte in ein Kühlmedium, z.B. Wasser. Dabei wird das aus den Öffnungen der Düsen austretende Material von einer Abschlagmesseranordnung mit zumindest einem umlaufenden Abschlagmesser dort abgetrennt, so dass Granulatkömer entstehen. Entsprechende Vorrichtungen, welche beispielsweise Verfahren zur Unterwassergranulierung ausführen, sind als Unterwassergranulierungsanlagen beispielsweise unter der Produktbezeichnung SPHERO® des Unternehmens Automatik Plastics Machinery GmbH bekannt.

Die europäische Patentanmeldung EP 2 052 825 A1 beschreibt eine Vorrichtung zum Granulieren von Kunststoff in einen Kühl- und Förderluftstrom gemäß einem sogenannten Trockenheißabschlagsverfahren, beispielsweise einsetzbar für PVC-Material. Die Kristallisation von Kunststoff wird dort allerdings nicht thematisiert.

Die deutsche Offenlegungsschrift DE 10 2009 006 123 A1 der gleichen Anmelderin beschreibt ein Verfahren und eine Vorrichtung zum Granulieren von thermoplastischem Kunststoffmaterial, wobei eine strömungsoptimierte radiale Zuströmung einer Kühlflüssigkeit vorgesehen ist, um so den energetischen Aufwand für den Abschlagmesserantrieb im flüssigen Kühlmittel zu verringern. Spezielle Lösungen der Problematiken der Herstellung kristallisierbarer Erzeugnisse unter Einbeziehung einer entsprechenden Gestaltung sind dort auch nicht thematisiert.

So kommt es bei der Herstellung von kristallisierbaren Erzeugnissen aus einem Schmelzematerial wesentlich auf die gleichmäßige Größe und somit Gewicht sowie auf die gleichmäßig erzielbare Formgebung der Erzeugnisse an. Auch sind große Stückzahlen gewünscht, was es erforderlich macht, dass ein entsprechendes Produktionsverfahren zuverlässig bei einer sehr großen Anzahl an Granulatkömern (z.B. bis zu 500 Millionen Stück pro Stunde) abläuft.

Anlagen zur Durchführung des Trockenheißabschlags in Luft als Kühlmedium gibt es schon sehr lange im Markt, da sie verhältnismäßig einfach zu konstruierende Maschinen zum Granulieren von strangextrudierten Thermoplasten darstellen. Dabei werden aus der Lochplatte austretende Schmelzestränge durch dichtest möglich an der Oberfläche rotierende Abschlagmesser und durch die dem Strangmaterial innewohnende Trägheit in kleine Stücke zu Granulatkömern zerhackt. Durch die Abschlagmesserrotation wird aus der Umgebung bzw. dem Inneren einer Schneidkammer mittels mit den Abschlagmessern mitrotierender Gebläseschaufeln Luft angesaugt, welche die Granulatkömer mehr oder weniger frei und zentrifugal vom Schnittort wegleitet. Die dabei auftretenden Probleme liegen in der schlechten Kühlung der Abschlagmesser, die mit der Zeit überhitzen und verkleben können, sowie der Neigung zum allgemeinen Verkleben und Verstopfen solcher Anlagen durch die auf die Granulate wirkenden zentrifugalen Beschleunigungen der Rotation der Abschlagmesser, insbesondere bei höheren Durchsätzen mit großen Stückzahlen von herzustellenden Granulatkömern unter realen Produktionsbedingungen. Weiter neigen so hergestellte Granulatkörner, zumal wenn die Viskosität des Schmelzematerials relativ hoch ist, zu zylindrischen und irregulären Formen, wobei gerade bei kristallisierbaren Materialien in den Folgeanwendungen eher sehr viele kugelförmige Granulatkörner einheitlicher Größe im Millimeterdurchmesserbereich benötigt werden. Typisches solches Mikrogranulat hat beispielsweise eine Korngröße mit einem Durchmesser von kleiner/gleich 1,5 mm.

Es ist die Aufgabe der vorliegenden Erfindung, ein Verfahren zur Herstellung von kristallisierbaren Erzeugnissen aus einem Schmelzematerial vorzusehen, welches die Nachteile des Standes der Technik überwindet und insbesondere auf relativ einfache und kostengünstige Weise eine effektive Granulierung von Granulatkömern kristallisierbarer Produkte mit gleichmäßiger Korngröße und gleichmäßiger sowie gleichbleibender Formgebung auch bei großen Stückzahlen von herzustellenden Granulatkömern unter realen Produktionsbedingungen ermöglicht. Eine weitere Aufgabe der Erfindung ist es, eine Vorrichtung zur Durchführung des Herstellungsverfahrens von oberflächig kristallinen sphärischen Granulaten mittels Trockenheißabschlags zu schaffen. Insbesondere ist es die Aufgabe der vorliegenden Erfindung dies im Zusammenhang mit der erfindungsgemäßen Anwendung für die Herstellung von Mikrogranulat mit einer Korngröße mit einem Durchmesser von kleiner/gleich 1,5 mm zu ermöglichen bzw. vorzusehen.

Diese Aufgabe wird erfindungsgemäß mit einem Verfahren und einer Vorrichtung mit den Merkmalen gemäß den unabhängigen Ansprüchen gelöst. Bevorzugte Ausführungsformen der Erfindung sind in den abhängigen Ansprüchen definiert.

Ein erster Aspekt der Erfindung betrifft ein Verfahren mit dem oberflächig kristalline sphärische Granulate mittels eines Trockenheißabschlags in einer Schneidkammer hergestellt werden, Dazu wird zunächst ein kristallisierbares Kunststoffmaterial geschmolzen. Anschließend wird das kristallisierbare Kunststoffmaterial durch eine Lochplatte hindurch extrudiert. Während des Trockenheißabschlags von Granulaten mit mindestens einem gegenüber der Lochplatte bewegten Abschlagmesser wird die Lochplatte unter Beibehaltung einer Viskosität der Schmelze des Kunststoffmaterials innerhalb der Öffnungen der Lochplatte temperiert. Ein oberflächiges Abkühlen der trocken abgeschlagenen Granulate wird mittels eines zentripetal zuströmenden Prozessgases auf eine oberflächige Kristallkeimbildungstemperatur abgekühlt, wobei die Kristallkeimbildungstemperatur unterhalb einer optimalen Kristallwachstumstemperatur und oberhalb einer Glasumwandlungstemperatur des kristallisierbaren Kunststoffmaterials liegt. Danach wird eine mittlere Granulattemperatur unter Steuerung der Prozessgasmenge bei adiabatisch eingestellter Temperatur, auf einem Niveau oberhalb der Kristallkeimbildungstemperatur und unterhalb einer Schmelztemperatur des Kunststoffmaterials in einem Bereich einer optimalen Kristallwachstumstemperatur aufrechterhalten. Dabei wird der Prozessgasstrom unter wandberührungsfreier Strömung der Granulate in der Schneidkammer solange geführt, bis die Granulate eine von ihrer Oberfläche aus gewachsene kristalline Schicht aufweisen.

Dieses Verfahren hat den Vorteil, dass die Kristallkeimbildung an der Oberfläche der abgeschlagenen Granulatkörner durch die zentripetale Kühlgasführung und die zunächst niedrige Abkühltemperatur der zuströmenden Prozessgase, welche die Granulatkörner oberflächig auf eine Temperatur noch unterhalb einer optimalen Kristallwachstumstemperatur abkühlt, anfänglich intensiviert wird und dafür gesorgt wird, dass die Granulatkömer eine Innenwand der Schneidkammer in der anfänglichen Keimbildungsphase und der sich anschließenden Keimwachstumsphase nicht berühren und nicht an der Innenwand kleben bleiben können, da sie in vorteilhafter Weise in dem zentripetalen Prozessgasstrom geführt werden.

Das Prozessgas zieht in dieser ersten Abkühl- oder besser Abschreckphase zur oberflächigen Kristallkeimbildung Wärme von den Granulatkömern ab und wird dabei selbst erwärmt, was das weitere Kristallwachstum der Kristallkeime fördert, da die optimale Kristallwachstumstemperatur oberhalb der Kristallkeimbildungstemperatur aber unterhalb der Schmelztemperatur bei kristallisierbaren thermoplastischen Kunststoffen liegt. Außerdem wird das Kristallwachstum durch die latente Wärme, die innerhalb der Granulatkörner gespeichert ist, gefördert zumal diese latente, d.h. innere Wärme der abgetrennten Granulatkömer beim Trockenheißabschlag nicht so schnell wie bei einem Granulieren in einer Kühlflüssigkeit abgeführt wird.

Ein Polykondensationsvorgang und der Kristallisationsvorgang werden beim Trockenheißabschlag nicht durch eine derart hohe Wärmeabfuhr wie bei Berührung der Oberfläche der Granulatkömer mit einer Kühlflüssigkeit wie Wasser begrenzt oder ganz unterbunden, da die Wärmeaufnahmefähigkeit von Prozessgasen deutlich geringer ist, als das Wärmeabfuhrvermögen von Kühlflüssigkeiten. So ist auch der Wärmeübergang bzw. der Wärmeübergangskoeffizient α durch Konvektion bei einer Kühlflüssigkeit wie etwa Wasser etwa 10mal höher bzw. größer als bei einem Gas wie etwa Luft. Somit können sich deutlich längere Polykondensationsketten im Volumen der Granulate ausbilden und damit ein qualitativ hochwertigeres Produkt beim erfindungsgemäßen Einsatz des Trockenheißabschlags für kristallisierbare Kunststoffmaterialien erzeugen. Ein weiterer Vorteil des erfindungsgemäßen Verfahrens ist es, dass bis zur Ausbildung einer nicht klebenden kristallinen oberflächennahen Schicht der Granulate eine Wandberührung derselben durch die Prozessgasführung verhindert wird.

In vorteilhafter Weise wird das zur Kühlung und zum Abtransport der frisch abgetrennten Granulatkömer benötigte, speziell im Hinblick auf die üblicherweise vorhandene Feuchtigkeitsempfindlichkeit eines zu kristallisierenden Thermoplasten, gasförmige Kühlmedium so dem Schneidbereich in der Schneidkammer der entsprechenden Granuliervorrichtung zugeführt, dass es dem zumindest einen Messer der Abschlagmesseranordnung möglichst wenig Widerstand entgegensetzt und gleichzeitig die Granulatkömer aus dem kristallisierbaren Schmelzematerial schnellstmöglich aus dem Rotationsbereich und somit dem Abtrennbereich entfernt. Somit ist ein hoher spezifischer Durchsatz an Material (großen Stückzahlen relativ kleiner Granulatkömer im Millimeterdurchmesserbereich) möglich, wobei gleichzeitig ein Verklumpen der Granulatkömer durch die erfindungsgemäß gute trockene Kühlung und das erfindungsgemäß erreichbare gleichmäßige Strömungsverhalten des Prozessgasstroms mit den darin sich befindenden Granulatkömern aus dem Schmelzematerial vermeidbar ist.

Bei einer weiteren Ausführungsform der Erfindung ist die Ausbildung einer nicht klebenden kristallinen Oberflächenschicht der Granulatkömer abgeschlossen, wenn diese den Auslass der Schneidkammer in dem Prozessgasstrom erreichen und auf einer Abrollplatte abrollen. Durch das Abrollen auf der Abrollplatte der nicht klebenden kristallinen Außenhülle bzw. Oberflächenschicht der Granulate wird eine Ausbildung, Formung und Vergleichmäßigung der qualitativ hochwertigen sphärischen Form der Granulate in vorteilhafter Weise unterstützt.

Erfindungsgemäß können somit die Granulatkörner, welche sich in dem Prozessgas befinden, nach dem Rotationsbereich weiter dem Bereich des Auslasses des Gehäuses zuströmen, in welchem sie in einem Winkel von weniger als 15° gegen eine dortige Wandung des Gehäuses geführt werden, so dass den in dem Prozessgasstrom befindlichen Granulatkömern dort eine rollende Bewegung aufgeprägt wird. Somit kann erfindungsgemäß bevorzugt die gleichmäßige Formgebung der Granulatkörner besonders zuverlässig erreicht werden.

Bevorzugt kann gemäß dem erfindungsgemäßen Verfahren ein Verhältnis des Massestroms des Prozessgases zum Massestrom der sich darin befindenden Granulatkömer in der Schneidkammer ein Beladungsverhältnis, definiert als Masse der Granulatkömer pro Stunde zu Masse des Prozessgases pro Stunde, im Bereich von 0,3 bis 0,7 betragen, bevorzugt ein Beladungsverhältnis von 0,5 betragen. Das Verkleben von Granulatkömern kann somit auch bei hohen Durchsatzmengen besonders zuverlässig vermieden werden, da ausreichend Prozessgas vorhanden ist, um die Granulatkömer ohne Verklumpen einzeln mit Prozessgas zu umgeben und so zu kühlen und zu transportieren.

In einem bevorzugten Ausführungsbeispiel des Verfahrens wird als kristallisierbares Kunststoffmaterial ein polymerisierbarer und/oder polykondensierbarer Thermoplast eingesetzt. Derartige Thermoplaste werden oberhalb ihrer Erweichungstemperatur ein zähes viskoses Klebstoffmaterial, so dass beim Abkühlen einer Schmelze eines thermoplastischen Kunststoffes oberhalb einer Erweichungstemperatur eine klebrige Oberfläche ausgebildet wird, die nur durch schnelles Unterschreiten der Erweichungstemperatur, die auch als Glasumwandlungstemperatur bekannt ist, weil die Schmelze von einem schmelzflüssigen Zustand in einen amorphen festen Zustand bei dieser Temperatur übergeht, vermieden werden kann. Wird jedoch dieser Kunststoff oberhalb seiner Glasübergangstemperatur eine zeitlang gehalten, können sich von der Oberfläche ausgehend Kristallisationskeime bilden und ein Kristallwachstum kann initiiert werden. Mit dem Kristallwachstum kann bewirkt werden, dass sich eine kristalline Schicht an der Oberfläche beispielsweise eines Granulats ausbildet und damit dieses thermoplastische Granulat aufgrund der kristallinen oberflächennahen Hülle auch oberhalb der Glasumwandlungstemperatur seine klebrigen Eigenschaften verliert. Dazu werden erfindungsgemäß Schmelzen der kristallisierbaren Thermoplaste zunächst nach einen Zerstückeln bzw. Abschlagen mithilfe des Abschlagmessers in Granulatpartikel auf eine Temperatur oberhalb der Glasübergangstemperatur und unterhalb einer deutlich höher liegenden optimalen Kristallwachstumstemperatur kurzzeitig abgekühlt, damit eine möglichst schnelle Kristallkeimbildung einsetzt.

Diese erste Abkühlphase oder Kristallkeimbildungsphase erfordert folglich ein schnelles Abkühlen unmittelbar nach dem Abschlag von Granulatkömern, insbesondere wenn bei einem bevorzugten Durchführungsbeispiel des Verfahrens als kristallisierbares Kunststoffmaterial ein polykondensierbares PET-Material eingesetzt wird.

Bei einer weiteren Ausführungsform des Verfahrens wird die Temperierung der Lochplatte durch einen Wärmefluidkreislauf in einem Temperaturbereich zwischen 250°C ≤ T ≤ 330°C mit einer Toleranz von ±0,5 bis ±1K gehalten. Dieser enge Toleranzbereich soll verhindern, dass die kristallisierbare Kunststoffschmelze innerhalb von Düsenöffnungen der Lochplatte diese zu verkleben beginnt und den Prozess vorzeitig beendet oder unterbricht.

Als Wärmefluid für den Wärmefluidkreislauf zur Temperierung der Lochplatte wird vorzugsweise ein Wärmeträgeröl eingesetzt, das in einer Temperierungseinrichtung innerhalb des oben genannten Temperaturbereichs zwischen 250°C ≤ T ≤ 330°C mit einer Toleranz von ±1 bis ±5K gehalten wird.

Weiterhin ist es vorgesehen, dass die Abkühlung durch einen zentripetalen Prozessgasstrom unmittelbar bei dem Trockenheißabschlag der Granulate auf eine Kristallkeimbildungstemperatur T_{K} in einem Temperaturbereich bei abgeschlagenen PET-Granulaten zwischen 100°C ≤ T_{K} ≤ 120°C zur Bildung von Kristallisationskeimen von der Oberfläche aus erfolgt. Dieser Temperaturbereich für die Kristallkeimbildung ist von dem Material des thermoplastischen Kunststoffes abhängig.

In einer weiteren Ausführungsform der Erfindung wird danach ein Halten der Temperatur der abgeschlagenen PET-Granulate in der Schneidkammer durch einen zentripetalen Prozessgasstrom auf einer Kristallwachstumstemperatur Tw in einem Temperaturbereich zwischen 150°C ≤ Tw ≤ 200°C zur Bildung einer kristallinen Schicht von der Oberfläche der abgeschlagenen PET-Granulaten aus durchgeführt. Wie bereits in Anspruch 1 beansprucht, liegt die optimale Kristallwachstumstemperatur Tw deutlich höher als die Kristallbildungstemperatur, die zwar über der Glasumwandlungstemperatur liegt, aber unterhalb des Bereichs für ein optimales Kristallwachstum, so dass die zusätzlich erforderliche Wärme einerseits durch die gespeicherte innere Wärme jedes einzelnen Granulatkorns das Kristallwachstum fördert und andererseits das beim Abschlag der Granulate relativ kühle Prozessgas durch die Aufnahme der Schmelzwärme der Granulate sich erwärmt und damit das Kristallwachstum zusätzlich stützt.

Da jedoch die Wärmeabfuhr durch das Prozessgas deutlich langsamer ist als die Wärmeaufnahme beispielsweise durch ein Kühlwasser, werden durch den Trockenheißabschlag die Kristallwachstumsphase und auch die Polymerisations- und Polykondensationsphase für den Kunststoff deutlich verlängert, so dass ein qualitativ hochwertiges Produkt mit dem erfindungsgemäßen Verfahren erreicht werden kann. In Bezug auf die PET-Kunststoffe kann die in den Granulaten gespeicherte innere Wärme ein Ausbilden von langkettigen Molekülen aus Polykondensaten in dem trockenen Prozessgasstrom ermöglicht werden. Weiterhin ist es vorgesehen, dass die Granulate mit einer kristallinen Oberflächenschicht von dem Prozessgasstrom in der Schneidkammer auf eine Abrollplatte geführt werden, die in einem flachen Winkel α zwischen 5° ≤ α ≤ 15° in den Prozessgasstrom hineinragt oder am Auslass der Schneidkammer das Ende der Kristallisationsphase für die Granulate bildet.

Ein weiterer Aspekt der Erfindung betrifft eine Vorrichtung zur Durchführung des Verfahrens zur Herstellung von oberflächig kristallinen sphärischen Granulaten mittels Trockenheißabschlag in einer Schneidkammer. Die Vorrichtung weist eine Extrusionsanlage mit einer Lochplatte auf, die zur Ausbildung von temperierten Kunststoffsträngen in die Schneidkammer hineinragt. Eine Temperierungseinrichtung der Lochplatte ist mit einem Wärmefluidkreislauf verbunden oder weist eine elektrisch betriebene Temperierungseinrichtung auf. Mindestens ein rotierendes Abschlagmesser ist innerhalb der Schneidkammer angeordnet und eine Schneidklinge des Abschlagmessers zum Auftrennen von Kunststoffsträngen der Lochplatte streift über Düsenöffnungen der Lochplatte. Prozessgasdüsen sind derart ausgerichtet, dass sie in die Schneidkammer hineinragen und einen zentripetalen Prozessgasstrom in Bezug auf die abgeschlagenen Granulate ausbilden. Eine Prozessgastemperier- und Prozessgasdosiereinrichtung regelt die Temperatur und die Menge sowie gegebenenfalls auch die Geschwindigkeit des in die Schneidkammer einströmenden Prozessgases, was wiederum so den sich ergebenden Wärmeübergangskoeffizienten α zwischen Granulatkömern und Prozessgas beeinflusst. So kann beispielsweise durch Verstellmechanismen die Spaltbreite eines Spalts von Spaltdüse(n), durch welchen das Prozessgas in die Schneidkammer einströmt, entsprechend einstellbar sein. Eine Abrollplatte für Granulate ist unter einem flachen Winkel an einem Auslass der Schneidkammer in dem Prozessgasstrom angeordnet. Ein Trenn- und Sammelbehälter steht über eine Granulatzufuhrleitung mit dem Auslass der Schneidkammer in Verbindung.
Diese Vorrichtung hat den Vorteil, dass durch die entsprechend gestalteten Prozessgasdüsen, die in die Schneidkammer ausgerichtet vorzugweise in einer umfänglichen Düsenringanordnung mit verstellbaren Gebläseschaufeln hineinragen, eine umfänglich gleichmäßige, d.h. über den Umfang gleich bleibend große oder zumindest im Wesentlichen gleich bleibend große Durchsatzmenge an Prozessgas in die Schneidkammer einströmen kann. Als Prozessgas ist Luft oder Stickstoff oder ein Inertgas oder ein Reaktionsgas, welches so ausgewählt ist, dass es mit dem zu granulierenden Schmelzematerial eine gewünschte chemische Reaktion eingehen kann, vorgesehen. Das Prozessgas ist entsprechend in den Rotationsbereich in der Schneidkammer von allen Seiten radial von außen nach innen strömend in Höhe des mindestens einen rotierenden Abschlagmessers über die Prozessgasdüsen einleitbar.
In einer bevorzugten Ausführungsform der Vorrichtung zur Herstellung von oberflächig kristallinen sphärischen Granulaten mittels Trockenheißabschlag weist die Temperiereinrichtung der Lochplatte einen Wärmefluidkreislauf auf, der die Lochplattentemperatur T_{L} in einem Temperaturbereich zwischen 250°C ≤ TL ≤ 330°C mit einer Toleranz von ±1 bis ±5K hält. Wie bereits oben beim Verfahren besprochen, ist das exakte Einhalten der Temperatur der Lochplatte von entscheidender Bedeutung, um ein Verkleben der Düsenöffnungen der Lochplatten zu vermeiden, was eine Unterbrechung des Prozesses zur Folge hätte.

Weiterhin ist es vorgesehen, dass die Prozessgastemperier- und Prozessgasdosiereinrichtung die Prozessgasmenge und Temperatur derart regelt, dass unmittelbar bei dem Trockengasabschlag der Granulate eine Kristallkeimbildungstemperatur T_{K} in einem Temperaturbereich zwischen 100°C ≤ T_{K} ≤ 120°C zur Bildung von Kristallisationskeimen von der Oberfläche abgeschlagener PET-Granulaten vorzeitig erhalten wird, so dass danach das Kristallwachstum zu einer oberflächennahen Schicht der Granulate erfolgen kann.

Weiterhin ist es vorgesehen, dass die Abrollplatte unter einem flachen Winkel α zwischen 5° ≤ α ≤ 15° in den Prozessabgasstrom im Auslassbereich der Schneidkammer hineinragt. Der damit verbundene Vorteil in Bezug auf die Gleichförmigkeit und die sphärische Ausbildung der Form der Granulate wurde bereits bei den Verfahrensansprüchen hingewiesen, so dass sich eine Wiederholung an dieser Stelle erübrigt.

Das Prozessgas kann aufgrund der umfänglich verlaufend angeordneten Prozessgasdüsen in vorteilhafter Weise von außen nach innen, d.h. zentripetal, oder im Wesentlichen von außen nach innen der Schneidkammer im Rotationsbereich, also im Bereich der Schnittebene, erfindungsgemäß zugeführt werden. Diese Prozessgasdüsenanordnung wird über eine um das Gehäuse herumlaufend angeordnete separate Prozessgaskammer gespeist. Durch die entsprechend vorgesehene Gestaltung der Prozessgaseinleitung und/oder Festlegung der Abmessungen der Prozessgasdüsenanordnung kann dem Prozessgas bei Eintritt in die Schneidkammer auch eine (zusätzliche) Umlaufgeschwindigkeit verliehen werden, die in etwa der Rotationsgeschwindigkeit des zumindest einen Abschlagmessers der Abschlagmesseranordnung der Schneidkammer entspricht.

Die dabei erfolgende Beschleunigung des Prozessgases auf die gewünschte Geschwindigkeit, d.h. die zur Erreichung des entsprechenden Drehimpulses benötigte Energie, kann dem Druck des Prozessgases entnommen werden. Die zusätzliche Umlaufgeschwindigkeit des Prozessgases, welche oben zusätzlich vorgesehen sein kann, kann entweder mechanisch über die Gestaltung der Prozessgasdüsenanordnung und/oder über die Steuerung der Durchsatzmenge des gasförmigen Prozessgases eingestellt und an unterschiedliche sonstige Verfahrensparameter (Materialdurchsatz, zu granulierendes Schmelzematerial, Größe der Granulatkörner u.A.) angepasst werden. Auch die Anzahl und Drehzahl des/der Abschlagmesser kann entsprechend angepasst werden.

Da erfindungsgemäß ein Prozessgasstrom in etwa mit derselben Geschwindigkeit wie die Rotationsgeschwindigkeit des zumindest einen Abschlagmessers im Rotationsbereich der Schneidkammer zuströmen kann, wird er das zumindest eine Abschlagmesser bzw. gegebenenfalls Zwischenräume zwischen mehreren Abschlagmessern einer Abschlagmesseranordnung durchfluten und die frisch abgetrennten Granulatkömer aus dem Rotationsbereich mit sich abführen, was ein Verkleben der Granulatkömer auch bei höheren Durchsatzmengen zuverlässig verhindern kann. Bei der sich ergebenden Strömung wird sich bei Annäherung an die Achse der Rotation des zumindest einen Abschlagmessers der Abschlagmesseranordnung die entsprechende Umlaufgeschwindigkeit des Prozessgases erhöhen, so dass die Strömungsbewegung von außen nach innen hin zunehmend erschwert wird und letztlich verhindert wird. Somit wird das Prozessgas in den Raum hinter dem zumindest einen Abschlagmesser der Abschlagmesseranordnung strömen und dabei in einer wendelförmigen Strömung von dem Bereich der Lochplatte und dem Rotationsbereich in der Schneidkammer wegströmen.

Bei der erfindungsgemäßen Vorrichtung kann also dem Prozessgas, welches der Schneidkammer zuströmt, mittels einer Formgebung einer radial die Schneidkammer umgebenden äußeren Prozessgaskammer und der in die Schneidkammer hineinragenden Prozessgasdüsenanordnung im Rotationsbereich die zentripetale oder zumindest im Wesentlichen zentripetale Strömung des Prozessgases aufgeprägt werden und bevorzugt auch ein zusätzlicher Drehimpuls aufgeprägt werden, welcher entsprechend der Richtung der Rotation des zumindest einen Abschlagmessers ausgerichtet ist.

Bevorzugt kann die Größe des zusätzlichen Drehimpulses dabei so groß sein, dass die entsprechende Geschwindigkeit des Prozessgases in Richtung der Rotation der Abschlagmesseranordnung so groß ist wie die Rotationsgeschwindigkeit der Abschlagmesseranordnung. Somit kann eine weiter optimierte Strömungsführung des Prozessgases, wie oben erläutert, bei dieser Ausführungsform der erfindungsgemäßen Vorrichtung ermöglicht werden. Die Strömung des Prozessgases verläuft dabei bevorzugt so, dass sie sich senkrecht zur Lochplatte ausrichtet und wegströmt. Dort entstehende Granulatkömer werden daher senkrecht bis wendelförmig von der Lochplatte weggeblasen. Der Volumenstrom des erfindungsgemäß strömenden Prozess- und Transportgases wird dabei zweckmäßig so gewählt, dass die Granulatkömer sofort nach dem Schnitt vereinzelt werden, also mit großem Überschuss.

Beispielsweise treten je Stunde 4 kg Polymer/kristallisierbares Schmelzematerial von 1 200 kg/m³ Dichte aus einer Lochplatte mit 24 Löchern und einem Teilkreisdurchmesser von rund 60 mm aus und werden durch 9 Abschlagmesser mit n = 3.900 1/min in 13.900 Granulatkömer pro Sekunde mit 0,5 mm Durchmesser zerteilt. Die Granulatkörner sollen in jeder Richtung einen Abstand a von etwa 1 cm zueinander haben. Der Massenstrom des gasförmigen Prozess- und Transportgases beträgt dabei etwa 8 kg/h und trägt dabei 4 kg/h Fördergut, was einem Verhältnis Fördergut zu Fördermedium ("Beladung") von 0,5 entspricht. Dies ist weit weniger als in der pneumatischen Förderung üblich, wo selbst bei Flugförderung ein Beladungsverhältnis von 10 bis 20, bei der Dickstromförderung von 60 und darüber üblich ist. Demgegenüber wird also das Prozess- und Transportgas im großen Überschuss zugeführt.

Betrachtet man die auftretenden Wärmeströme, so ist feststellbar, dass je nach Polymer/kristallisierbarem Schmelzematerial bei Zufuhr von z.B. 20°C warmer Luft eine Endtemperatur von Luft und darin befindlichen Granulatkömern von etwa 55°C erreicht wird. Für intensivere oder noch schnellere Kühlung müsste also die Luftmenge erhöht oder die Zufuhrtemperatur weiter gesenkt werden.

Auch kann in der erfindungsgemäßen Vorrichtung eine Durchsatzmenge und/oder ein Druck und/oder eine Richtung des über die Prozessgaseinrichtung zugeführten Prozessgases mittels einer Steuereinheit so gesteuert werden, dass dadurch eine Richtung der Strömung des Prozessgases in die Schneidkammer eingestellt wird. Zum Beispiel kann eine Steuereinheit vorgesehen sein, die eine oder mehrere bewegliche schaufelförmige Prozessgasdüsen steuern kann.

Die Verfestigung der Granulatkörner kann dabei zusätzlich unterstützt werden, indem die Wandung der Schneidkammer gekühlt wird, und zum Beispiel in doppelwandiger Ausführung von einem Kühlfluid durchströmt wird.

Zur weiteren Strömungsoptimierung auch im Bereich des Auslasses kann der Auslass in dem der Prozesseinströmung abgewandten Bereich der Schneidkammer der erfindungsgemäßen Vorrichtung angeordnet sein. Somit kann ein gleichmäßiges Abströmen des Prozessgases mit den sich darin befindenden Granulatkömern aus dem kristallisierbaren Schmelzematerial erreicht werden, wodurch auch ein eventuelles Verklumpen in der Schneidkammer und insbesondere im Bereich des Auslasses derselben zusätzlich besonders zuverlässig vermieden werden kann. Dabei können die Granulatkömer beispielsweise in einer Auslaufspirale gesammelt und tangential aus der Schneidkammer herausgeführt werden.

Die Erfindung wird im Folgenden beispielhaft anhand der beigefügten Figur erläutert werden. Es zeigt:

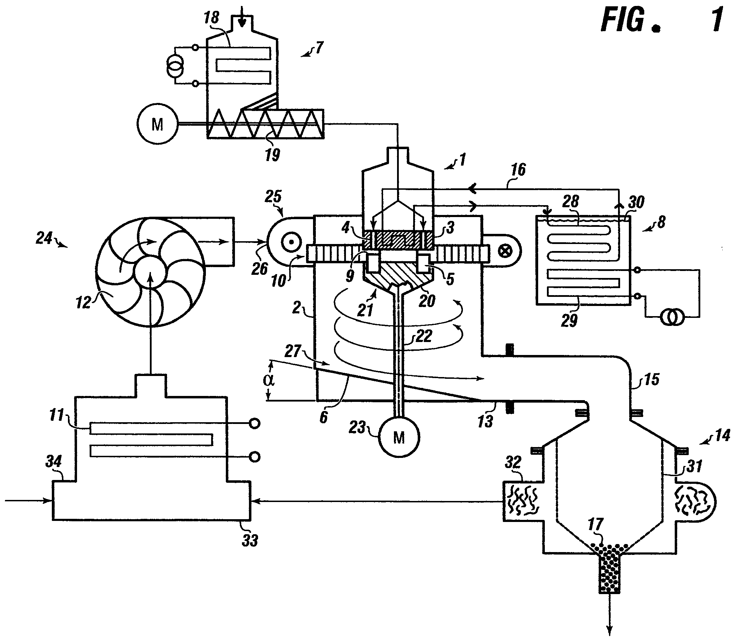

Fig. 1 in einer schematischen Schnittansicht eine Trockenheißabschlagsvorrichtung zur Durchführung des erfindungsgemäßen Verfahrens.

Die Figur 1 zeigt schematisch in einer Schnittansicht eine Trockenheißabschlagsvorrichtung 1 zur Durchführung des erfindungsgemäßen Verfahrens.

Die in Fig. 1 schematisch gezeigte Trockenheißabschlagsvorrichtung 1 weist eine Lochplatte 3 mit darin vorgesehenen lochförmigen Düsenöffnungen 4 auf, die in eine Schneidkammer 2 hineinragt und eine Auslassdüsenplatte einer Extrusionsanlage 7 darstellt. Die Extrusionsanlage 7 weist einen Reaktor bzw. einen Schmelzebehälter mit einer Heizeinrichtung 18 auf, mit welcher Ausgangsmaterialien einer kristallisierbaren Kunststoffmasse erschmolzen werden und dann mittels einer Austragsschnecke bzw. mittels eines Extruders 19 der Lochplatte 3 zur Ausbildung von Kunststoffsträngen zugeführt werden.

Die Anordnung der Düsenöffnungen 4 ist im Wesentlichen rotationssymmetrisch und auch die sonstige Gestaltung der Trockenheißabschlagsvorrichtung 1 ist rotationssymmetrisch bzw. im Wesentlichen rotationssymmetrisch aufgebaut. Gemäß der Darstellung der Fig. 1 ist der Lochplatte 3 eine Abschlagmesseranordnung 20 zugeordnet mit zumindest einem Abschlagmesser 5, das eine Schneidklinge 9 aufweist, die rotierend an den Düsenöffnungen 4 der Lochplatte 3 entlang streift. Das mindestens eine Abschlagmesser 5 ist an einem Abschlagmesserträger 21, angeordnet, der auf einer Abschlagmesserwelle 22 fixiert ist. Die Abschlagmesseranordnung 20 wird von einem Motor 23 angetrieben, so dass das zumindest eine Abschlagmesser 5 die Düsenöffnungen 4 in der Lochplatte 3 überstreicht und dabei Granulatkömer des aus den Düsenöffnungen 4 austretenden kristallisierbaren Schmelzematerials abtrennt. Das kristallisierbare Schmelzematerial kann auf herkömmliche Art und Weise in der Extrusionsanlage 7 zunächst erschmolzen und zum Beispiel über den Extruder 19 oder eine Schmelzepumpe zu dem Bereich der Lochplatte 3 transportiert werden und aus den Düsenöffnungen 4 gedrückt werden.

Für die Aufrechterhaltung eines kontinuierlichen Betriebs ist es erforderlich, dass die Lochplatte um 1 bis 5 K genau auf einer Betriebstemperatur T zwischen 250°C ≤ T ≤ 330°C gehalten wird. Dazu können elektrische Temperierelemente mit der Lochplatte thermisch in Verbindung stehen oder wie in Figur 1 eine Temperiereinrichtung mit einem Wärmefluidkreislauf vorgesehen werden. Als Wärmefluidkreislauf 16 ist in Figur 1 ein Wärmeölkreislauf vorgesehen. Das im Kreislauf 16 befindliche Öl wird durch einen Wärmetauscher 28 geführt, der in ein über eine Heizung 29 temperierbares Fluidbad 30 eingetaucht ist.

Die Schneidkammer 2, in welche die Lochplatte 3 hineinragt, wird im Betrieb erfindungsgemäß mit einem Prozessgas, z.B. Luft, gefüllt und durchströmt, wobei die Schneidkammer 2 zumindest das eine Abschlagmesser 5 und den Abschlagmesserträger 21 sowie zumindest einen Teil der Abschlagmesserwelle 22 umgibt. Die Abschlagmesserwelle 22 ist in dem Schneidkammerbereich, welcher der Lochplatte 3 abgewandt ist, fluiddicht aus der Schneidkammer 2 herausgeführt, und der Motor 23 ist vorgesehen, um über die Abschlagmesserwelle 22 das zumindest eine Abschlagmesser 5 zu einer Rotationsbewegung anzutreiben.

Es ist eine Prozessgaseinrichtung 24 vorgesehen mit einer Prozessgastemperiereinrichtung 11, einer Prozessgasdosiereinrichtung 12 und einer separaten Prozessgaskammer 25, welche die Schneidkammer 2 im Bereich der Rotation des zumindest einen Abschlagmessers 5 umfänglich umgibt, und mit einer umfänglich verlaufend angeordneten Prozessgasdüsenanordnung 10 zwischen der Prozessgaskammer 25 und der Schneidkammer 2 ausgestattet ist, wobei die Prozessgasdüsenanordnung 10 im in der Fig. 1 gezeigten Fall eine umfänglich umlaufende Ringspaltdüse mit einer über den Umfang gleichbleibenden Düsenbreite von z.B. 3 mm ausbildet. Die Prozessgaskammer 25 weist über deren Umfang, d.h. umfänglich, von einer Einlassöffnung 26 für das temperierte und dosierte Prozessgas in der Prozessgaskammer 25 beginnend in Rotationsrichtung des zumindest einen Abschlagmessers 5 einen abnehmenden Querschnitt auf.

Gemäß der in Fig. 1 gezeigten Gestaltung sind mehrere Leiteinrichtungen vorgesehen, so dass durch die Prozessgasdüsenanordnung 10 eine umfänglich gleichmäßige Durchsatzmenge an Prozessgas strömt. Somit wird durch die Prozessgasdüsenanordnung 10 zwischen der Prozessgaskammer 25 und der Schneidkammer 2 das Prozessgas umfänglich von allen Seiten radial von außen nach innen oder im Wesentlichen radial von außen nach innen in die Schneidkammer 2 eingeleitet. Dabei ergibt sich zumindest im Rotationsbereich des zumindest einen Abschlagmessers 5 eine zentripetale oder zumindest im Wesentlichen zentripetale Strömung des Prozessgases.

Die Prozessgasdüsen 10 sind so angeordnet, dass in Umfangsrichtung immer noch eine Möglichkeit gegeben ist, dass das Prozessgas in alle Bereiche der Schneidkammer 2 strömen kann. Die Leiteinrichtungen dienen dabei der Strömungsführung des Prozessgases und nicht dazu, einzelne Bereiche über den Umfang der separaten Prozessgaskammer 25 abzuteilen. Die Anordnung der einzelnen Leiteinrichtungen kann beispielsweise gleichmäßig über den Umfang der Prozessgaskammer 25 bzw. der Prozessgasdüsenanordnung 10 verteilt sein. Die Befestigung der einzelnen Leiteinrichtungen kann ortsfest z.B. durch Verschweißen entsprechender Leitflügel an die Wandungen erfolgen. Die Leiteinrichtung(en) können auch einzeln oder bevorzugt gemeinsam z.B. durch eine Steuereinheit verstellbar ausgeführt sein, wobei z.B. der Anstellwinkel entsprechend verstellbar sein kann.

Gemäß der Darstellung der Fig. 1 ist ein Auslass 13 in dem der Prozessgaseinrichtung abgewandten Bereich der Schneidkammer 2 angeordnet. Nach dem Rotationsbereich strömt das Prozessgas mit den darin sich befindenden Granulatkömern weiter dem Bereich des Auslasses 13 der Schneidkammer 2 zu, in welchem sie in einem Winkel α von weniger als 15° gegen eine dortige Wandung der Schneidkammer 2 geführt werden, so dass den sich in dem Prozessgas befindlichen Granulatkömern aus dem kristallisierbaren Schmelzematerial dort eine rollende Bewegung aufgeprägt wird. Dabei ist gemäß der Darstellung der Fig. 1 zum Auslass 13 hin ein wendeiförmiger Auslaufabschnitt 27 vorgesehen, welcher die Strömung des zu dem Auslass 13 ausströmenden Prozessgases mit den darin befindlichen Granulatkömern entsprechend führt und somit auch einen Druckaufbau in diesem Bereich der Schneidkammer 2 und/oder im Auslass 13 ermöglicht, nämlich aufgrund des durch den spiralförmigen Auslaufabschnitt 27 sich ergebenden Staudrucks. Auch ein entsprechender spiralförmiger Auslaufabschnitt 27 ist konstruktiv möglich.

Der Prozessgasstrom führt die oberflächig kristallisierten und sphärisch geformten Granulate in einem Millimeterdurchmesserbereich einem Auffang- und Sammelbehälter 14 über eine Granulatzufuhrleitung 15 zu. Die Granulate werden in einem Sieb 31 aufgefangen und von dem Prozessgasstrom getrennt. Das Prozessgas kann über ein Staubfilter 32 zu der Prozessgaseinrichtung 24 über einen ersten Einlass 33 zur Prozessgasrückführung der Prozessgastemperiereinrichtung 11 in einem Kreisprozess zugeführt werden, wobei es in der Prozessgastemperiereinrichtung 11 auf eine Prozessgastemperatur heruntergekühlt oder bei Unterschreitung derselben aufgeheizt wird. Falls das rückgeführte Prozessgas nicht zur Dosierung in der Prozessgasdosiereinrichtung 12 ausreicht kann über einen zweiten Einlass 34 zur Frischgaszuführung frisches Prozessgas, z.B. Luft, der Prozessgastemperiereinrichtung 11 der Prozessgaseinrichtung 24 zugeführt werden.

Die in Figur 1 gezeigte Vorrichtung dient der Durchführung des erfindungsgemäßen Verfahrens in der Anwendung für die Herstellung von kristallisierbaren Erzeugnissen bzw. sphärischen PET-Granulaten 17 aus teilkristallinen PET Granulatkömern.

In der Figur 1 ist die Trockenheißabschlagsvorrichtung 1 mit waagrecht angeordneter Lochplatte 3 und entsprechend angeordneten sonstigen Elementen dargestellt. Die Anordnung kann allerdings auch entsprechend gegenüber der Anordnung der Figur 1 um 90 Grad gedreht mit senkrecht angeordneter Lochplatte 3 und entsprechend um 90 Grad gedreht angeordneten Elementen der Trockenheißabschlagsvorrichtung 1 vorgesehen sein.

Die Trockenheißabschlagsvorrichtung 1 sowie das entsprechend beschriebene erfindungsgemäße Verfahren können vorteilhaft insbesondere erfindungsgemäße Anwendung finden für die Herstellung von Mikrogranulat mit einer Korngröße mit einem Druchmesser von kleiner/gleich 1,5 mm, da erfindungsgemäß so durch die geeignete Temperierbarkeit besonders zuverlässig entsprechend kleine Granulatkörner herstellbar sind.

### Bezugszeichenliste

- 1: Trockenheißabschlagsvorrichtung
- 2: Schneidkammer
- 3: Lochplatte
- 4: Düsenöffnung der Lochplatte
- 5: Abschlagmesser
- 6: Abrollplatte
- 7: Extrusionsanlage
- 8: Temperierungseinrichtung der Lochplatte
- 9: Schneidklinge
- 10: Prozessgasdüse
- 11: Prozessgastemperiereinrichtung
- 12: Prozessgasdosiereinrichtung
- 13: Auslass der Schneidkammer
- 14: Auffang- und Sammelbehälter
- 15: Granulatzuführleitung
- 16: Wärmefluidkreislauf
- 17: PET-Granulate
- 18: Heizeinrichtung
- 19: Extruder
- 20: Abschlagmesseranordnung
- 21: Abschlagmesserträger
- 22: Abschlagmesserwelle
- 23: Motor
- 24: Prozessgaseinrichtung
- 25: Prozessgaskammer
- 26: Einlassöffnung
- 27: Auslaufabschnitt
- 28: Wärmetauscher
- 29: Heizung
- 30: Bad
- 31: Sieb
- 32: Staubfilter
- 33: erster Einlass (Prozessgasrückführung)
- 34: zweiter Einlass (Frischgaszuführung)

## Patentansprüche

1. Verfahren zur Herstellung von oberflächig kristallinen sphärischen Granulaten mittels eines Trockenheißabschlags in einer Schneidkammer (2), das nachfolgende Verfahrensschritte aufweist:
- Erschmelzen eines kristallisierbaren Kunststoffmaterials mit anschließendem Extrudieren des kristallisierbaren Kunststoffmaterials durch eine Lochplatte (3) hindurch;
- Temperieren der Lochplatte unter Beibehaltung einer Viskosität der Schmelze des Kunststoffmaterials innerhalb von Düsenöffnungen (4) der Lochplatte (3) während des Trockenheißabschlags von Granulaten mit mindestens einem gegenüber der Lochplatte (3) bewegten Abschlagmesser (5);
- oberflächiges Abkühlen der trocken abgeschlagenen Granulate mittels eines zentripetal zuströmenden Prozessgases auf eine oberflächige Kristallkeimbildungstemperatur, die unterhalb einer optimalen Kristallwachstumstemperatur und oberhalb einer Glasumwandlungstemperatur des kristallisierbaren Kunststoffmaterials liegt;
- Aufrechterhalten einer mittleren Granulattemperatur unter Steuerung der Prozessgasmenge bei adiabatisch eingestellter Temperatur, auf einem Niveau oberhalb der Kristallkeimbildungstemperatur und unterhalb einer Schmelztemperatur des Kunststoffmaterials in einem Bereich einer optimalen Kristallwachstumstemperatur und
- Führung des Prozessgasstromes unter wandberührungsfreier Strömung der Granulate in der Schneidkammer (2) bis die Granulate eine von ihrer Oberfläche aus gewachsene kristalline Schicht aufweisen.

2. Verfahren nach Anspruch 1, **dadurch gekennzeichnet, dass** als Kunststoffmaterial ein polymerisierbarer und/oder polykondensierbarer Thermoplast eingesetzt wird.

3. Verfahren nach Anspruch 1 oder Anspruch 2, **dadurch gekennzeichnet, dass** als Kunststoffmaterial ein polykondensierbares PET-Material eingesetzt wird.

4. Verfahren nach einem der vorhergehenden Ansprüche, **dadurch gekennzeichnet, dass** die Temperierung der Lochplatte (3) durch einen Wärmefluidkreislauf in einem Temperaturbereich zwischen 250°C ≤ T ≤ 330°C mit einer Toleranz von ±1 bis ±5K gehalten wird.

5. Verfahren nach Anspruch 4, **dadurch gekennzeichnet, dass** als Wärmefluid in dem Wärmefluidkreislauf (16) zur Temperierung der Lochplatte (3) ein Wärmeträgeröl eingesetzt wird.

6. Verfahren nach einem der vorhergehenden Ansprüche, **dadurch gekennzeichnet, dass** die Abkühlung durch einen zentripetalen Prozessgasstrom unmittelbar bei dem Trockenheißabschlag der Granulate auf eine Kristallkeimbildungstemperatur T_{K} in einem Temperaturbereich bei abgeschlagenen PET-Granulaten zwischen 100°C ≤ T_{K} ≤ 120°C zur Bildung von Kristallisationskeimen von der Oberfläche der abgeschlagenen PET-Granulate aus erfolgt.

7. Verfahren nach einem der vorhergehenden Ansprüche, **dadurch gekennzeichnet, dass** ein Halten der Temperatur der abgeschlagenen PET-Granulate (17) in der Schneidkammer (2) durch einen zentripetalen Prozessgasstrom auf einer Kristallwachstumstemperatur T_{W} in einem Temperaturbereich zwischen 150°C ≤ T_{W} ≤ 200°C zur Bildung einer kristallinen Schicht von der Oberfläche der abgeschlagenen PET-Granulate aus erfolgt.

8. Verfahren nach einem der vorhergehenden Ansprüche, **dadurch gekennzeichnet, dass** die Granulate (17) mit einer kristallinen Oberflächenschicht von dem Prozessgasstrom in der Schneidkammer (2) auf eine Abrollplatte (6) geführt werden, die in einem flachen Winkel α zwischen 5° ≤ α ≤ 15° in den Prozessgasstrom hineinragt.

9. Verfahren nach einem der vorhergehenden Ansprüche, **dadurch gekennzeichnet, dass** die in den Granulaten (17) gespeicherte innere Wärme ein Ausbilden von langkettigen Molekülen aus Polykondensaten des PET-Kunststoffes in dem Prozessgasstrom ermöglicht.

10. Vorrichtung zur Durchführung des Verfahrens nach einem der Ansprüche 1 bis 9 zur Herstellung von oberflächig kristallinen sphärischen Granulaten mittels Trockenheißabschlags in einer Schneidkammer (2) aufweisend:
- eine Extrusionsanlage (7) mit einer Lochplatte (3), die zur Ausbildung von temperierten Kunststoffsträngen in die Schneidkammer (2) hineinragt,
- mindestens ein rotierendes Abschlagmesser (5) das innerhalb der Schneidkammer (2) über Düsenöffnungen (4) in der Lochplatte (3) mit einer Schneidklinge (9) streift;
- eine Anordnung von Prozessgasdüsen (10), die in die Schneidkammer (2) derart ausgerichtet hineinragen, dass sie einen zentripetalen Prozessgasstrom in Bezug auf die abgeschlagenen Granulate ausbilden;
**dadurch gekennzeichnet, dass** die Vorrichtung weiter aufweist:
- eine Temperierungseinrichtung (8) der Lochplatte (3) mit Wärmefluidkreislauf (16);
- eine Prozessgastemperier- und Prozessgasdosiereinrichtung (11, 12), welche die Temperatur und die Menge des in die Scheidkammer (2) einströmenden Prozessgases regelt;
- eine Abrollplatte (6) für Granulate, wobei die Abrollplatte (6) unter einem flachen Winkel an einem Auslass (13) der Schneidkammer (2) in den Prozessgasstrom hineinragt;
- einen Trenn- und Sammelbehälter (14), der über eine Granulatzufuhrleitung (15) mit dem Auslass (13) der Schneidkammer (2) in Verbindung steht.

11. Vorrichtung nach Anspruch 10, **dadurch gekennzeichnet, dass** die Temperiereinrichtung (8) der Lochplatte (3) durch den Wärmefluidkreislauf (16) die Lochplatte (3) in einem Temperaturbereich zwischen 250°C ≤ T ≤ 330°C mit einer Toleranz von ±1 bis ±5K hält.

12. Vorrichtung nach Anspruch 10 oder 11, **dadurch gekennzeichnet, dass** die Prozessgastemperier- und Prozessgasdosiereinrichtung (11, 12) die Prozessgasmenge, Temperatur und Geschwindigkeit derart regelt, dass unmittelbar bei dem Trockenheißabschlag der Granulate sich eine Kristallkeimbildungstemperatur T_{K} in einem Temperaturbereich zwischen 100°C ≤ T_{K} ≤ 120°C zur Bildung von Kristallisationskeimen von der Oberfläche abgeschlagener PET-Granulaten ausbildet.

13. Vorrichtung nach einem der Ansprüche 10 bis 12, **dadurch gekennzeichnet, dass** die Abrollplatte (6) unter dem flachen Winkel α zwischen 5° ≤ α ≤ 15° in den Prozessgasstrom mit Granulaten hineinragt.

## Claims

1. Method for manufacturing superficially crystalline spherical granules by means of air-cooled hot die face pelletizing in a cutting chamber (2) that has the following steps:
- melting of a crystallizable plastic material with subsequent extrusion of the crystallizable plastic material through a perforated plate (3);
- controlling the temperature of the perforated plate while maintaining a viscosity of the melt of the plastic material within nozzle openings (4) of the perforated plate (3) during the air-cooled hot die face pelletizing of granules with at least one cut-off knife (5) that is moved relative to the perforated plate (3);
- superficial cooling of the dry-cut granules by means of a centripetally inflowing process gas at a superficial crystal nucleation temperature, which is below an optimum crystal growth temperature and above a glass transition temperature of the crystallizable plastic material;
- maintaining a mean granule temperature in a range of an optimum crystal growth temperature at a level above the crystal nucleation temperature and below a melting temperature of the plastic material while controlling the quantity of process gas at an adiabatically set temperature; and
- guiding the process gas flow while the granules flow into the cutting chamber (2), without touching the walls, until the granules have a crystalline layer growing from their surface.

2. Method according to claim 1, **characterized in that** a polymerizable and/or polycondensable thermoplastic is used as the plastic material.

3. Method according to claim 1 or claim 2, **characterized in that** a polycondensable polyethylene terephthalate (PET) material is used as the plastic material.

4. Method according to one of the preceding claims, **characterized in that** the temperature control of the perforated plate (3) is maintained in a temperature range of 250°C ≤ T ≤ 330°C, with a tolerance of ±1 to ±5 K, by means of a thermal fluid circuit.

5. Method according to claim 4, **characterized in that** a heat transfer oil is used as a thermal fluid in the thermal fluid circuit (16) for temperature control of the perforated plate (3).

6. Method according to one of the preceding claims, **characterized in that** the cooling to a crystal nucleation temperature T_{K} in a temperature range at the cut polyethylene terephthalate (PET) granules of 100°C ≤ T_{K} ≤ 120°C is accomplished by a centripetal flow of process gas directly at the air-cooled hot die face pelletizing of the granules for the purpose of forming crystal nuclei from the surface of the cut polyethylene terephthalate (PET) granules.

7. Method according to one of the preceding claims, **characterized in that** a maintaining of the temperature of the cut polyethylene terephthalate (PET) granules (17) in the cutting chamber (2) is accomplished by a centripetal flow of process gas at a crystal growth temperature Tw in a temperature range of 150°C ≤ Tw ≤ 200°C for the purpose of forming a crystalline layer from the surface of the cut polyethylene terephthalate (PET) granules.

8. Method according to one of the preceding claims, **characterized in that** the granules (17) having a crystalline surface layer are carried by the process gas flow in the cutting chamber (2) onto a rolling plate (6) that projects into the process gas flow at a shallow angle α of 5° ≤ α ≤ 15°.

9. Method according to one of the preceding claims, **characterized in that** the internal heat stored in the granules (17) allows a formation of long-chain molecules of polycondensates of the polyethylene terephthalate (PET) plastic in the process gas flow.

10. Device for carrying out the method according to one of claims 1 to 9, for manufacturing superficially crystalline spherical granules by means of air-cooled hot die face pelletizing in a cutting chamber (2), having
- an extrusion system (7) with a perforated plate (3) that projects into the cutting chamber (2) for the purpose of forming temperature-controlled plastic strands;
- at least one rotating cut-off knife (5) that passes a cutting blade (9) over nozzle openings (4) in the perforated plate (3) within the cutting chamber (2);
- an arrangement of process gas nozzles (10) that project into the cutting chamber (2) oriented such that they form a centripetal process gas flow with respect to the cut granules;
**characterized in that** the device additionally has:
- a temperature control device (8) of the perforated plate (3) with a thermal fluid circuit (16);
- a process gas temperature control and process gas dosing device (11, 12) that regulates the temperature and the quantity of process gas flowing into the cutting chamber (2);
- a rolling plate (6) for granules, wherein the rolling plate (6) projects into the process gas flow at a shallow angle at an outlet (13) of the cutting chamber (2);
- a separating and collecting container (14), which is connected to the outlet (13) of the cutting chamber (2) by a granule feed line (15).

11. Device according to claim 10, **characterized in that** the temperature control device (8) of the perforated plate (3) maintains the perforated plate (3) in a temperature range of 250°C ≤ T ≤ 330°C, with a tolerance of ±1 to ±5 K, by means of the thermal fluid circuit (16).

12. Device according to claim 10 or 11, **characterized in that** the process gas temperature control and process gas dosing device (11, 12) regulates the process gas quantity, temperature, and speed in such a way that a crystal nucleation temperature TK in a temperature range of 100°C ≤ T_{K} ≤ 120°C is created directly at the air-cooled hot die face pelletizing of the granules for the purpose of forming crystal nuclei from the surface of cut polyethylene terephthalate (PET) granules.

13. Device according to one of claims 10 to 12, **characterized in that** the rolling plate (6) projects into the process gas flow with granules at the shallow angle α of 5° ≤ α ≤ 15°.

## Revendications

1. Procédé pour la fabrication de granulés sphériques à la surface cristalline au moyen d'une coupe à chaud et à sec dans une chambre de coupe (2), comportant les étapes de procédé suivantes :
- fusion d'un matériau plastique cristallisable avec ensuite extrusion du matériau plastique cristallisable à travers une plaque perforée (3) ;
- mise en température de la plaque perforée en maintenant une viscosité de la matière fondue du matériau plastique dans les orifices des buses (4) de la plaque perforée (3) pendant la coupe à chaud et à sec des granulés avec au moins un couteau de découpe (5) mobile par rapport à la plaque perforée (3) ;
- refroidissement en surface des granulés découpés à sec au moyen d'un gaz de procédé à alimentation centripète à une température de nucléation cristalline en surface qui est inférieure à la température optimale de croissance des cristaux et supérieure à la température de transition vitreuse du matériau plastique cristallisable ;
- maintien d'une température moyenne des granulés par contrôle du volume de gaz de procédé à température réglée adiabatique à un niveau supérieur à la température de nucléation des cristaux et inférieure à la température de fusion du matériau plastique dans une plage de température optimale de croissance des cristaux et
- guidage du flux du gaz de procédé avec écoulement des granulés dans la chambre de coupe (2) sans contact avec la paroi jusqu'à ce que les granulés comportent une couche cristalline formée à partir de leur surface.

2. Procédé selon la revendication 1, **caractérisé en ce qu'**un matériau thermoplastique polymérisable et/ou polycondensable est utilisé comme matériau plastique.

3. Procédé selon la revendication 1 ou la revendication 2, **caractérisé en ce que** le matériau plastique utilisé est un matériau PET polycondensable.

4. Procédé selon une des revendications précédentes, **caractérisé en ce que** la température de la plaque perforée (3) est maintenue dans une plage de température entre 250°C≤ T ≤ 330°C avec une tolérance de ± 1k à ±5K grâce à un circuit fluide caloporteur.

5. Procédé selon la revendication 4, **caractérisé en ce que** le fluide caloporteur utilisé dans le circuit de fluide caloporteur (16) pour la mise en température de la plaque perforée (3) est une huile caloporteuse.

6. Procédé selon une des revendications précédentes, **caractérisé en ce que** le refroidissement par un flux de gaz de procédé centripète est effectué immédiatement à la coupe à chaud et à sec des granulés à une température de nucléation des cristaux T_{K} comprise dans une plage de température des granulés PET coupés entre 100°C ≤ T_{K} ≤ 120°C pour la formation de noyaux de cristallisation à partir de la surface des granulés PET coupés.

7. Procédé selon une des revendications précédentes, **caractérisé en ce qu'**un maintien de la température des granulés PET coupés (17) est effectué dans la chambre de coupe (2) par un flux de gaz centripète à une température de croissance des cristaux Tw comprise dans une plage de température entre 150°C ≤ T_{W} ≤ 200°C pour former une couche cristalline à partir de la surface des granulés PET coupés.

8. Procédé selon une des revendications précédentes, **caractérisé en ce que** les granulés (17) avec une couche cristalline superficielle sont guidés dans la chambre de coupe (2) par le flux de gaz de procédé vers une plaque de roulement (6) qui fait saillie dans le flux de gaz de procédé en faisant un un angle plat α entre 5° ≤ α ≤ 15°.

9. Procédé selon une des revendications précédentes, **caractérisé en ce que** la chaleur intérieure stockée dans les granulés (17) permet la formation de molécules à chaînes longues du matériau PET polycondensé dans le flux de gaz de procédé.

10. Dispositif pour exécuter le procédé selon une des revendications 1 à 9 pour la fabrication de granulés sphériques à surface cristalline au moyen de la coupe à chaud et à sec dans une chambre de coupe (2) comportant :
- une extrudeuse (7) comportant une plaque perforée (3) faisant saillie dans la chambre de coupe (2) pour former des cordons de plastique tempérés
- au moins un couteau de découpe rotatif (5) dont la lame (9) racle les orifices de buses (4) de la plaque perforée (3) à l'intérieur de la chambre de coupe (2)
- un agencement des buses pour le gaz de procédé (10) faisant saillie dans la chambre de coupe (2) en étant orientées de telle sorte qu'elles produisent un flux de gaz centripète par rapport aux granulés coupés
**caractérisé en ce que** le dispositif comporte de plus :
- un dispositif de mise en température (8) de la plaque perforée (3) avec circuit de fluide caloporteur (16) ;
- un dispositif de mise en température et de dosage du gaz de procédé (11, 12) régulant la température et le débit du gaz de procédé entrant dans la chambre de coupe (2)
- une plaque de roulement (6) pour les granulés, ladite plaque (6) faisant saillie dans le flux de gaz de procédé avec un angle plat dans une sortie (13) de la chambre de coupe (2)
- un réservoir de séparation et de collecte (14) connecté par une conduite d'alimentation en granulés (15) avec la sortie (13) de la chambre de coupe (2).

11. Dispositif selon la revendication 10, **caractérisé en ce que** le dispositif de mise en température (8) de la plaque perforée (3) maintient la plaque perforée (3) dans une plage de température entre 250°C ≤ T ≤ 330°C avec une tolérance de ±1 K à ± 5K au moyen du circuit de fluide caloporteur (16).

12. Dispositif selon la revendication 10 ou 11, **caractérisé en ce que** le dispositif de mise en température et de dosage du gaz de procédé (11, 12) régule le débit, la température et la vitesse de telle sorte qu'immédiatement à la coupe des granulés se forme une température de nucléation des cristaux T_{K} comprise dans une plage de température 100°C ≤ T_{K} ≤ 120°C pour former des noyaux de cristaux à partir de la surface des granulés PET coupés.

13. Dispositif selon une des revendications 10 à 12 **caractérisé en ce que** la plaque de roulement (6) fait saillie dans le flux de gaz de procédé chargé de granulés en faisant un angle plat entre 5° ≤ α ≤ 15°.
